(19) Europäisches Patentamt
European Patent Office
Office européen des brevets

(11) **EP 2 781 334 A1**

(12) **EUROPEAN PATENT APPLICATION**

(43) Date of publication:
24.09.2014 Bulletin 2014/39

(51) Int Cl.:
*B29C 45/73* (2006.01)       *B29C 33/02* (2006.01)

(21) Application number: 14156683.6

(22) Date of filing: 26.02.2014

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 22.03.2013  TR 201303522

(71) Applicant: **Viko Elektrik Ve Elektronik Endustrisi Sanayi**
**Ve Ticaret Anonim Sirketi**
**34887 Samandira Kartal (TR)**

(72) Inventors:
• **Suzer Ilbay, Sultan**
**ISTANBUL (TR)**
• **Kandemir, Akin**
**ISTANBUL (TR)**

(74) Representative: **Iskender, Ibrahim**
**Destek Patent, Inc.**
**Konak Mah. Lefkose Cad. NM Ofis Park**
**B Block No: 36/5**
**Besevler Nilüfer**
**16110 Bursa (TR)**

(54) **Mould cooling pin for the narrow and long domes of the injection moulds**

(57)    This invention is the mould cooling pin (10) that ensures that these regions are cooled simultaneously with the other regions of the mould (1) by being placed inside the narrow domed, long forms that can be present in the mould (1) structure due to the design of the product produced in the plastic injection moulds (1), that the cooling cycle time is decreased and that the part production is realized in a faster and efficient way and by consuming less energy and whose body is made of material having high heat conductivity and in whose body, there is gas having high heat conductivity.

Figure 1

EP 2 781 334 A1

**Description**

**TECHNICAL FIELD**

This invention deals with the mould cooling pin realizing the process of cooling of the long, narrow dome and thick regions that can be available in the moulds due to the product design in the thermoplastic injection moulds as simultaneously with the other regions of the mould.

This invention is especially related to the mould cooling pin that decrease the cooling cycle duration of the mould in the plastic injection machines and that ensure that all regions are cooled simultaneously and the part production is realized in a faster and more efficient way and by consuming less energy.

**THE PRIOR ART**

In the prior art, the injection moulds having the appropriate space to the dimensions and shapes of the parts to be molded in it and ensuring the filling of its melted plastic to the space with the injection method and ensuring its shape taking by being cooled and the injection machines making production with these moulds have been developed. The injection machine injects the melted plastic to the inside of the mould and ensures that it is cooled and is made waited in the space opened inside the mould till it takes the shape. In the molding of the plastics, the plastic raw material is melted with heat with the help of the resistances inside the chamber and it is injected to the space opened inside the mould. The cooling of the melted plastics injected to the mould is realized with the water channels opened inside the mould. In these channels, mostly water is used. However, in some situations, other liquids (oil, etc.) can also be used. One of the most important elements of an injection machine is the mould. The injection operation is realized to the mould. It is essential that a mould appropriate to the structure of the product must be used for producing a product with the injection machine.

In the injection machines, there are cooling systems available that ensure the cooling of the plastics that fill the mould space. The cooling system directly affects the quality of the part. As the parts which are not cooled in a balanced and complete way do not get completely hardened, they can be exposed to the distortion after leaving the mould. Also, during the operation of the mould, the mould starts to be heated after a while with the heat of the melted plastics. The heating of the mould affects the operation performance of the mould, its cycle duration and part quality. In the mass production, for obtaining products in the same quality, it is required to operate in the same mould with the constant values (constant mould temperature, constant melt temperature, pressure, velocity). For this, it is required that the mould core and case should be cooled with the cooling system for the mould to stay at the constant temperature continuously.

The heat distribution of the thermoplastic mould has a very big effect on the plastic raw material processing process and on the quality and economic operability. It is also possible with a balanced and appropriate heat distribution to be protected from the unnecessary energy costs. In the thermoplastic moulds, it is not always possible to ensure the homogeneous heat distribution due to the design conditions. Due to the fact that mould steels are very small in the moulds and especially at the regions which have narrow dome and more thickness, for example at the screwing pins of flush-mounted fuse base box, it is observed that the homogeneous heat distribution cannot be provided with the cooling channels. It has been detected in the analyses made with the thermal camera that these regions could not be simultaneously cooled with the other regions. When the temperature values of the screwing pin region taken with the thermal camera are analyzed, it is observed that the temperature values of the mould at these regions remain high.

The most important parameter in the calculation of cycle time of a thermoplastic mould is the part thickness. As it is also seen in the cycle time calculation formula given below, the part thickness is included in the calculation with its square. For example, that the thickness in a region on a produced part is two times more when compared to the other regions causes that the cycle duration of that region gets four times longer. Below is the cycle time calculation formula.

$$t_K = 0{,}165 \cdot \frac{s^2}{a_{eff}}$$

s = maximum thickness
$a_{eff}$ = effective heat transmission coefficient (mm/s$^2$)

As the mould steels are very small, it is not possible to cool the narrow domed screwing pins with the cooling channels. This situation causes that the cycle happens to be 40 seconds or exceeds it on a flush-mounted fuse base box mould whose cycle time can be 20 seconds. As a result, as the machines are required to operate for longer durations than the required, higher energy consumption is at issue.

There are very various methods available in the technique known as related to the mould cooling. A current application in this issue has the number of EP2282880B1; and it has been published under the title of the 'cooler distribution for cooling mould'. In the summary part of the invention: the expressions of "The invention is related with a cooling system for cooling a mould via the cooling places, it is composed of an expansion area in which a capillary tube enters and having a returning channel for the evaporation and discharging in gas form of the cooler which is transmitted in liquid form to the cooling places with the help of a capillary tube connected to a feeding channel. A distributive block which can be connected to a cooler source and a cooler chamber and in which the cooling channels are embedded on at least one plane has been designed in a way in which it can be connected onto the mould with a flange." have taken place.

Another invention in this issue is the mould cooling system having the application number of TR 2008/00041. In the published summary section of the utility model, the expressions of; "This invention is a system developed with the aim of the development of a cooling system in the plastic injection moulds and increasing the production speed." have taken place.

Another implementation has the application number of TR 2008/00042 and it is related with the mould cooling system with the help of the conductive metal. This invention is a system developed with the aim of the developments of the cooling system with the help of the conductive metal by changing the in-mould design in the plastic injection moulds and with the aim of increasing the production speed.

None of the mould cooling applications whose summary parts are mentioned above includes a development for the cooling of the narrow dome and long parts of the mould. These applications have mainly been designed as oriented for the whole of the mould.

As a result, with the aim of eliminating the above mentioned disadvantages in the plastic injection moulds and ensuring its economical and efficient operability, the method of developing a method that will make possible the simultaneous cooling of the regions being narrow domed and having more thickness with the main part has been selected.

## AIM OF THE INVENTION

The current invention is related with the mould cooling method meeting the above mentioned requirements in the thermoplastic mould cooling and eliminating all disadvantages and bringing some additional advantages.

The main objective of this invention is to ensure that the regions being narrow domed and having more thickness are cooled simultaneously with the main part in the product made with the plastic injection moulds.

Another objective of the invention is to ensure that the cooling duration is almost at the same value in every region of the mould by decreasing the cooling cycle time.

Another objective of the invention is to make the mould usage life longer by decreasing the mould failures by ensuring the homogenous heat distribution at all regions of the mould.

Another objective of the invention is the realization of the part production faster by the machines and consumption of less energy with the help of the decreasing of the cooling cycle times. With such a development, it is aimed to save time and energy.

Another objective of the invention is to make contribution to the protection of the environment due to the production realized by using less energy.

With the invention, it is aimed to ensure the capacity increase without requiring an additional machine and mould investment.

Another objective of the invention is to ensure quality increase in the production by preventing the deformation that happens in the hot regions during the production.

Another objective of the invention is to eliminate the quality problems that happen before the cooling. Due to the simultaneous and balanced cooling realized within the mould, it is aimed to prevent the faulty productions arising from the shrinkage or hot deformation and the formation of the pore inside the material and color differences that happen due to the temperature difference in the colorful products.

To realize all advantages that are mentioned above and that will be understood from the below detailed expression, the current invention is the mould cooling pin that ensures that regions are cooled simultaneously with the other regions of the mould by being placed inside the narrow dome, long forms that can be present in the mould structure due to the design of the product produced in the plastic injection moulds and whose body is made of material having high heat conductivity and in whose body, there is gas having high heat conductivity.

The structural and characteristic features of the invention and all of its advantages will be more clearly understood with the help of the below given figures and the detailed explanation written as making references to these figures and for this reason, it is also required that the evaluation should be realized by considering these figures and the detailed explanation.

## SHORT DESCRIPTION OF THE FIGURES

For the best understanding of the structuring of the current invention and its advantages together with the additional elements, it is required to be evaluated together with the figures whose explanations are made below.

Figure 1 ; The lateral profile section of the thermoplastic mould can be observed in a preferred application of the invention issue cooling pin.

Figure 2 ; It is the three dimensional appearance of a thermoplastic mould including the invention issue cooling pin. In this appearance, also, the section of the mould from the front profile takes place.

## REFERENCE NUMBERS

[0025]

1. Injection mould
2. Female mould
3. Male mould
4. Cooling water inlet
5. Mould Cooling channel
6. Pin Cooling channel
7. Mould space
10. Cooling pin
11. Pin upper end
12. Pin lower end
20. Mould pin
21. Form end
22. Montage end
30. Seal

**DETAILED DESCRIPTION OF THE INVENTION**

In this detailed explanation, the preferred structuring of the invention issue mould cooling pin (1) are explained as only oriented for better understanding of the issue and in a way which will not form any limiting effects.

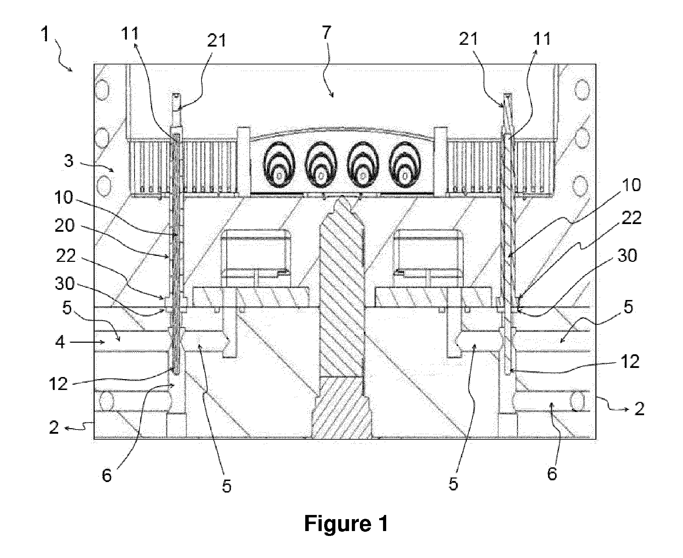

This invention is a mould cooling pin (10) which ensures the simultaneous cooling of the narrow dome and thick regions of the mold (1) that can be present on the moulds due to the product design on the thermoplastic injection moulds (1) with the its other regions. In the Figure 1, the appearance of one section from the lateral profile of a preferred application of the invention issue mould cooling pin takes place. According to this, the mould cooling pin (10) has been applied to an injection mould (1) used in the production of the flush-mounted fuse base box (1). In this product which is in the form of box having empty inner, the mould cooling pin has been integrated to the mould (1) for the purposes of the cooling of the screwing pins having narrow dome.

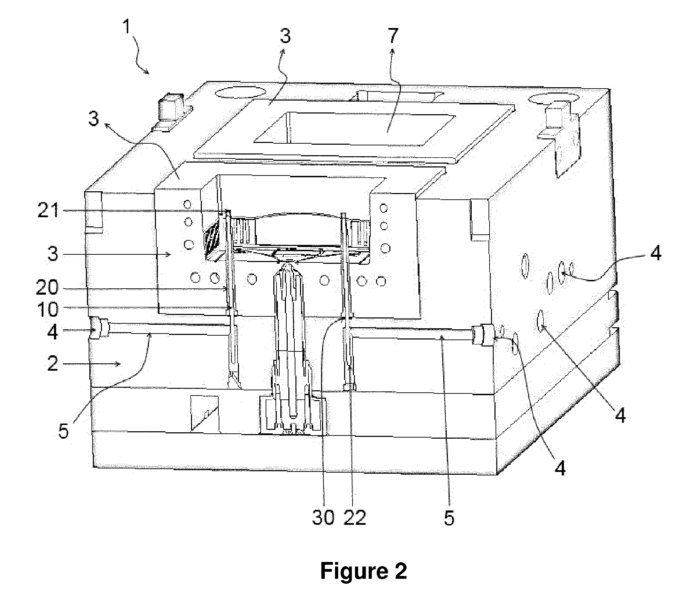

In the Figure 2, a three dimensional appearance of a thermoplastic mould (1) including the invention issue mould cooling pin (10) has been given. A thermoplastic mould is mainly composed of a female mould (2) and the male mould (3) which sits inside of the mentioned female mould (2). In the inner side of the male mould (3), the mould space (7) giving shape to the product is located. In the application preferred here, the mould space (7) is in the form of the flush-mounted fuse base box. In the mentioned fuse base box design, the screw slots have been used for the cover montage. The mould pins (20) have been used for shaping these slots in the form of thin smooth cylinder with empty inners inside the mould space (7). The end (21) at the upper part of the mentioned mould pins (20) is the form end; its end on the lower part is the montage end (22). The form end (21) takes place in the mould space (7) inside the male mould (3) and has functions in taking form of the screw slot. The montage end (22) fixes the mould pin (20) to the female mould (2). With the help of the mould pins (20), the screw slots which are adjacent vertically to the inside of the fuse base box body are formed.

In the production realized with the injection mould (1), after the raw material in the form of melt that forms the thermoplastic product is injected to the mould space (7), the process of the cooling of the mould (1) is started. In the cooling operation, generally, the cold water is used. As it can been seen from the Figure 1 and 2, in the mould structuring (1), there are a great number of mould cooling water inlets (4) and channels (5). The cold water given from the cooling water inlet (4) on the mould body to the cooling channel (5) is made circulated within the mould (1), and it is ensured that the mould (1) is cooled together with the product in it.

The total duration passed for the cooling operation of a part in the production is called cooling cycle. For the cooling operation to be completed, it is required that all sections of the part should be cooled to a certain degree. As the mould designs are made according to the part produced and in some products there are narrow dome forms, the realization of the cooling operation simultaneously becomes difficult. As in the example given in the Figure 1 and 2, a simultaneous and rapid cooling cannot be realized with the traditional methods in the cooling of the screw slots inside the mould (1), the invention issue new structuring has been developed.

The mould in which nitrogen gas is available in the invention issue structuring is the cooling pins (10). As it can be observed from the Figure 1, the mould cooling pin (10) has been placed into the space inside the mould pin (20) body, and it is a pin which is thinner than the mold pin (20). The body of the mould cooling pin (10) has preferably been made of the copper material having high thermal conductivity coefficient. The lower end (12) of the mould cooling pin (10) has been located inside the female mould (2); and its upper end (11) has been located inside the male mould (3). The lower end (11) of the mould cooling pin (10) passes inside a cooling channel (5). In addition to the mentioned cooling channel (5), a pin cooling channel (6) has been structured inside the mould (1) in a way in which it will embody the whole lower edge (11) of the mould cooling pin (10). In the separation region of the male and female moulds (2,3) of the mould cooling pin (10), a seal is affixed. The mentioned seal (30) is preferably O-ring gasket, and it hinders the cooling water passage between the female mould (2) in the upper part and mould pin (20).

**The working principle of the invention issue mould cooling pin (10) is as follows:**

After the material in the melt form is injected into the product mould (1), the cooling cycle starts. In this cycle, primarily, the cooling liquid is given into the product mould (1) from the cooling water channels (5,6). The liquid circulating within the channels (5,6) remains hot and the heat transfer between it and the mould (1) happens and the cooling liquid leaves the mould (1) as its heat getting increased, and the temperature of the mould (1) decreases. The invention issue cooling pin (20) has been designed for the cooling of the domes having narrow domes. The cooling of the mould pin (20) giving the screw slot form in the Figure 1 constitutes an example for this. The cooling water that passes from the pin cooling channel (6) gets into contact with the lower end (11) of the mould cooling pin. The upper end (11) of the mould cooling pin (10) is inside the mould (3) and inside the body of the pin (20) giving form to the screw slot. As the mould cooling pin (10) is made of a copper material having high thermal conductivity, there is nitrogen gas inside its body. Due to this structure having high thermal conductivity, the cooling water that gets in contact with the lower end (12) of the mould cooling pin (10) makes heat transmission towards the upper edge (11) of the mould (1) in a rapid duration when compared to the other regions and the upper end (21) of the mould pin is cooled. With the cooling of the upper end (21) of the mould pin, also, the cooling of the narrow domed screw slot given to the form is ensured with the help of the upper end (21).

The invention issue mould cooling pin (10) ensures simultaneous cooling of the regions having narrow domes and more thickness with the other regions of the mould (1) in a way mentioned above. By this way, the cooling cycle time of the mould (1) is decreased with the rate of 50% on average and the increase has been ensured in the mould (1) capacity and production speed. With the effective cooling realized, the production of more complex, thin-walled, wavy parts with the injection method will be possible. At the same time, the realization of the cooling simultaneously means the increase in the product quality. Yet, in case the simultaneous cooling is not realized inside the mould (1), that there are different tensions on the product to be taken off from mould (1) due to the temperature difference can cause deformation on the product and color misalignment. One of the most important benefits that the invention provides is that the part production can be realized by consuming less energy in the injection machines with the decreasing of the cooling cycle times. The saving obtained from the energy makes contribution both to the decreasing of the production costs and the protections of the environment.

**Claims**

1. A mould cooling pin (10) **characterized in**;

    - ensuring that regions are cooled simultaneously with the other regions of the mould (1) by being placed inside the narrow domed, long forms that can be present in the mould (1) structure due to the design of the product produced in the plastic injection moulds (1), and,
    - that its body is made of material having high heat conductivity and
    - that there is gas having high heat conductivity in its body.

2. A mould cooling pin (10) according to Claim 1, *characterized in that* body of mould cooling pin (10) is preferably made of copper material.

3. A mould cooling pin (10) according to Claim 1, *characterized in that comprising* nitrogen gas within body of mould cooling pin (10).

4. A mould cooling pin (10) according to Claim 1, *characterized in that;* pin lower end (12) is cooled by means of an additional pin cooling channel (6) available inside a female mould (2).

5. A mould cooling pin (10) according to Claim 1, *characterized in that;* pin lower end (12) has been located inside the female mould (2) where the cooling channels (5, 6) are available; and pin upper end (11) has been located inside the male mould (3) giving form to the product.

6. A cooling pin (10) according to any of the preceding claims, *characterized in that;* due to its body having high thermal conductivity and gas inside its body, the lower end (12) which is cooled with the help of the cooling channels (5, 6) inside the female mould (2) cools the upper end (12) inside the male mould (3) and cools this region of the mould (1) as simultaneously with the other regions and by this way, it decreases the cooling cycle time.

7. As it is the mould cooling pin (10) that is appropriate to the Claim 1, *characterized in that;* at least one seal (30) that provides seal (30) between pin lower end (12) located inside the female mould (2) and pin upper end (11) located inside the male mould (3).

**Figure 1**

**Figure 2**

Europäisches
Patentamt

European
Patent Office

Office européen
des brevets

# EUROPEAN SEARCH REPORT

Application Number

EP 14 15 6683

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "thermal pins", , 6 February 2007 (2007-02-06), pages 121-123, XP055027297, Retrieved from the Internet: URL:http://web.archive.org/web/20070206082 023/http://www.bmsburns.com/catalog/pages1 20-123.pdf [retrieved on 2012-05-15] * page 120 - page 122 * ----- | 1-7 | INV. B29C45/73 ADD. B29C33/02 |
| X | "HILFSMITTEL ZUM INNENKUEHLEN VON WERKZEUGSTIFTEN", KUNSTOFFE, CARL HANSER VERLAG, MUNCHEN, DE, vol. 67, no. 7, 1 July 1977 (1977-07-01), page 391, XP001173502, ISSN: 0023-5563 * the whole document * ----- | 1-7 | |
| X | FR 2 276 115 A1 (COMMISSARIAT ENERGIE ATOMIQUE [FR]) 23 January 1976 (1976-01-23) * claims 1, 9, 10; figures 1 - 4 * ----- | 1,3-7 | TECHNICAL FIELDS SEARCHED (IPC) B29C |
| X | JP S54 135854 A (SUZUKI METAL INDUSTRY CO LTD) 22 October 1979 (1979-10-22) * figures 1 -3 * ----- | 1,7 | |
| X | US 2006/177533 A1 (BODEN CHRISTIAN S [US] ET AL) 10 August 2006 (2006-08-10) * paragraphs [0020] - [0021]; figure 5 * ----- | 1,7 | |

The present search report has been drawn up for all claims

| Place of search | Date of completion of the search | Examiner |
|---|---|---|
| Munich | 11 June 2014 | Gemeinböck, Gerald |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**                    EP 14 15 6683

This annex lists the patent family members relating to the patent documents cited in the above-mentioned European search report.
The members are as contained in the European Patent Office EDP file on
The European Patent Office is in no way liable for these particulars which are merely given for the purpose of information.

11-06-2014

| Patent document cited in search report | | Publication date | Patent family member(s) | Publication date |
|---|---|---|---|---|
| FR 2276115 | A1 | 23-01-1976 | NONE | |
| JP S54135854 | A | 22-10-1979 | NONE | |
| US 2006177533 | A1 | 10-08-2006 | NONE | |

EPO FORM P0459

For more details about this annex : see Official Journal of the European Patent Office, No. 12/82

## REFERENCES CITED IN THE DESCRIPTION

**Patent documents cited in the description**

- EP 2282880 B1
- TR 200800041
- TR 200800042